# EUROPEAN PATENT APPLICATION

(11) **EP 1 064 854 A1**
(43) Date of publication of application: **03.01.2001**
(21) Application number: 99111578.3
(22) Date of filing: 15.06.1999
(51) Int. Cl.: A23L 1/105, A23L 1/10, A23L 1/212, A23L 2/38, A23L 1/064

(54) **Process for increasing the fruity taste of foodstuffs with acidified and/or fermented cereal flour**

(71) Applicant: Société des Produits Nestlé S.A., 1800 Vevey (CH)
(72) Inventor: Reinl, Hubert, 8261 Tuessling (DE); Santana Suarez, Ruben, 84576 Teising (DE); Briegleb, Christoph, 84453 Muehldorf am Inn (DE)
(74) Representative: Thomas, Alain

(57) **Abstract**

The present invention concerns a process for increasing the fruity taste of foodstuffs with reduced content of fruit material, which comprises adding thereto an amylaceous composition resulting from a process wherein a slurry of cereal flour is first subjected to soaking and further sterilised and acidified and/or fermented.

## Description

The present invention concerns a process for increasing the fruity taste of foodstuffs with reduced content of fruit material.

The EP Patent No. 667'106 already concerns a process for reducing the content of fermented milk product and/or fruit material in foodstuffs , which comprises adding to said fermented milk product or fruit material a fermented composition comprising a mixture of cereal flour and at least one non-cereal starch material, like potato starch or manioc starch. The problem with the addition of the non-cereal starch material is that it covers the fruity taste of the composition and therefore is not a satisfying solution for bringing a good product on the market, if this product is mainly based on a fruit. According to the above mentioned EP Patent, the presence of said starch is necessary for obtaining the required texture and smoothness.

The aim of the present invention is to manufacture a fruity-product having a pleasant texture without the addition of a starch and wherein the taste of the added fruit is increased, so that it is possible to reduce the presence of said fruit, whereas a pleasant product is obtained for the consumer.

The present invention concerns a process for increasing the fruity taste of foodstuffs with reduced content of fruit material, which comprises adding thereto an amylaceous composition resulting from a process wherein a slurry of cereal flour is first subjected to soaking and further sterilised and acidified and/or fermented.

Traditionally the fruity flavour of foodstuffs with reduced fruit content can only be kept by adding aroma to the products. Also a high sophisticated stabilising system is necessary to achieve the same texture as the full fruit product. It is possible according to the invention to avoid the addition of any aroma and of the stabilising agents.

According to the invention, the cereal flour used is advantageously selected from the group consisting of rice flour, wheat flour, oat flour, barley flour and any mixture thereof depending on the nature of the final product. Rice flour is preferred as leading to a fermented material having a neutral taste.

The acidification of the slurry of cereal is carried out either by the addition of lactic acid, or citric acid or a mixture of both. In the case of a fermentation, said fermentation is reached by an inoculation with an acidifying strain or a mixture of acidifying strains selected from Lactobacillus species, Streptococcus thermophilus and Bifidobacterium species and by a fermentation over a period and a temperature such as to afford a pH of 3,0 to 5,0 of the fermented material. The preferred strains are of the Lactobacillus species and they are selected from the group consisting of L. acidophilus, L. casei, L. plantarum, L. delbrueckii, L. brevis, L. pentosus, L. mesenteroides and L. bulgaricus and a mixture thereof. According to the invention, the fermentation process can be performed using conventional techniques. It will be carried out over a period and within a temperature range suitable to keep the selected strains active and in such a way to achieve a well controlled pH value of the fermented material.

The fermented material which is referred to hereabove has the further advantage not to alter the initial taste and flavour of the fruit products.

The invention concerns further a composition useful for reducing the fruit content in foodstuffs, which consists in an amylaceous composition resulting from a process wherein a slurry of cereal flour is first subjected to soaking and further sterilised and acidified and/or fermented as described above. In the case of the use of the above composition in a liquid state, that is for a fruit drink, the content of the cereal flour is comprised between 4 and 10 %, that of the sugar between 0 and 8 %, that of the yeast extract between 0 and 0.3 % and the strain is added in an amount of 0.01 and 0.05 % of the composition. All the percentages given in the present specification are in weight.

In the case of the use of the composition in a semi-solid product, like a fruit pap, or in a solid product, like a fruit dessert, said composition contains from 8 to 16 % cereal flour, from 0 to 10 % sugar, between 0 and 0.3 % monoglyceride and from 0.01 and 0.05 % of a strain. In both cases, the strains used are those as above described in relation with the process of the invention. The composition has a pH of about 3.0 to 5.0 and has a dry matter content of about 4 to 20 %.

The present invention finally concerns a foodstuff comprising a fruit material together with the above described composition. The type of the fruit material used is not critical. It is possible to use according to the invention any type of fruit, like banana, apple, orange, peach,pineapple, lemon, and others. As already mentioned above, the foodstuff can be in a solid state, like a fruit dessert, a mousse, in a semi-solid state, like a fruit pap for kids and babies, or in a liquid state, like a fruit drink. The content of fruit in the foodstuff is comprised between 25 and 95 %, the remaining being the fermented or acidified composition.

Depending on the microbiological concept of the foodstuff, it can be pasteurised or sterilised and cold or hot filled.

The following examples represent an illustration of the present invention but in no way any restriction of same.

### Example 1

### Banana jelly with cereal base

### Recipe:

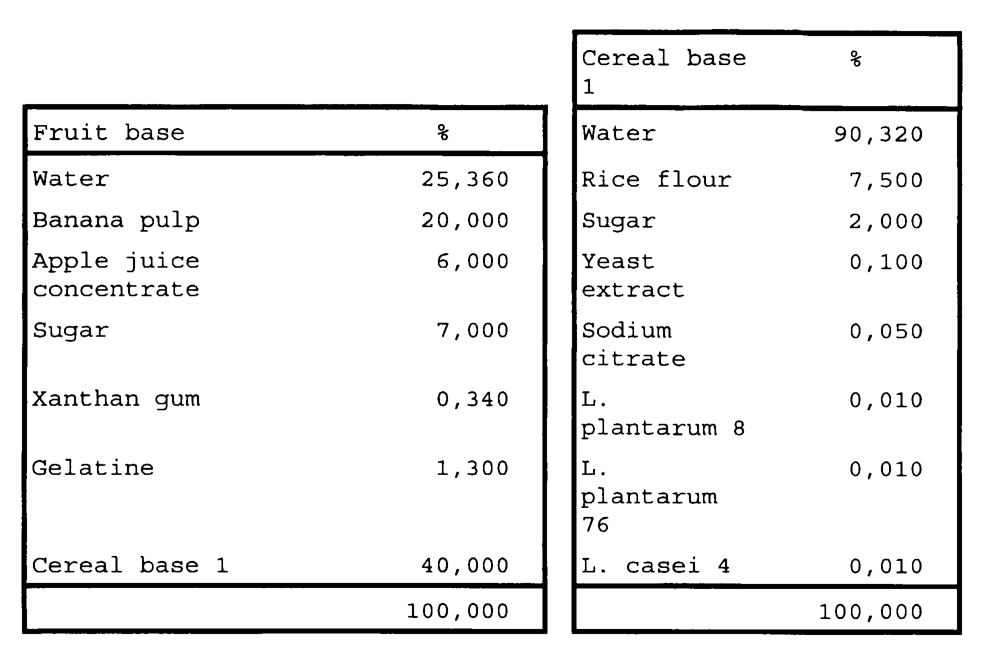

### Preparation:

a) Mixing of all dry ingredients of the cereal base, that is rice flour, sugar, yeast extract and sodium citrate.
b) Dissolving said mix in water at 65°C and soaking.
c) UHT-treatment of this cereal base with plate-heat-exchangers/tubular-heat-exchangers or steam injection 140°C/10s.
d) Cooling the cereal base with plate-heat-exchangers/tubular-heat-exchangers 36-39°C.
e) Inoculation of the cereal base with the three strains and fermentation to pH 3,8.
f) Mixing of the dry ingredients of the fruit base, that is banana pulp, sugar, xanthan gum and gelatine.
g) Dissolving of these ingredients in water and in the apple juice concentrate, addition of the cereal base.
h) Pasteurisation with plate-heat-exchangers/tubular-heat-exchangers 98°C/12s.
i) Filling in cups at 75°C.

### Example 2

### Orange mousse with cereal base

### Recipe:

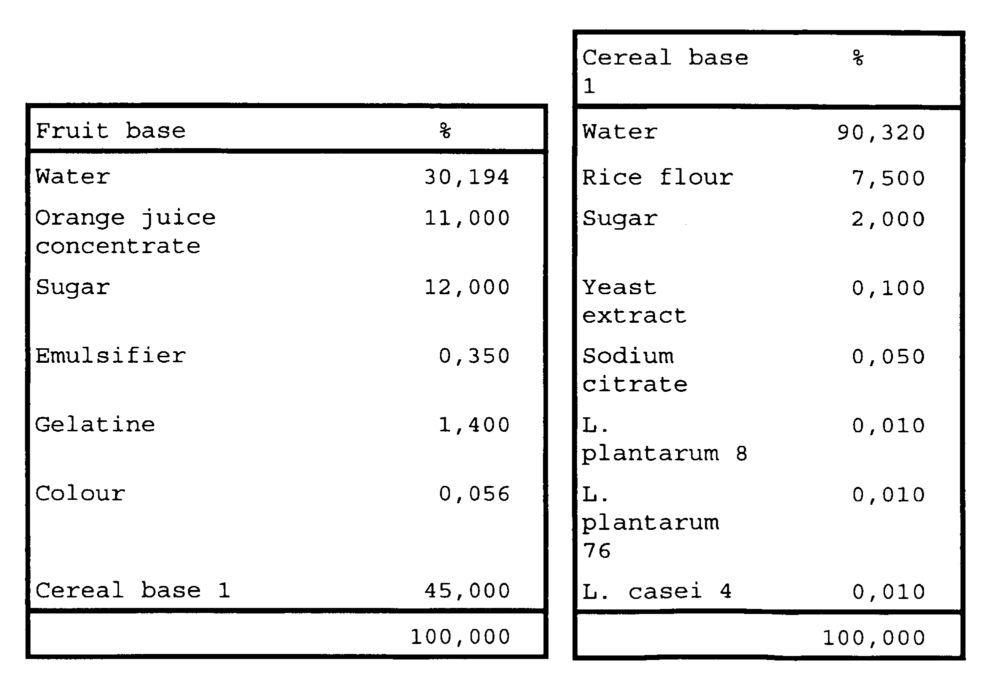

### Preparation:

a) Mixing of all dry ingredients of the cereal base, that is rice flour, sugar, yeast extract and sodium citrate.
b) Dissolving said ingredients in water at 65°C and soaking.
c) UHT-treatment of this cereal base with plate-heat-exchangers/tubular-heat-exchangers or steam injection 140°C/10s.
d) Cooling of the cereal base with plate-heat-exchangers/tubular-heat-exchangers 36-39°C.
e) Inoculation of the cereal base with the three strains and fermentation to pH 3,8.
f) Mixing of the dry ingredients of the fruit base, that is sugar, emulsifier, gelatine and colour.
g) Dissolving of these ingredients in water and orange juice concentrate, addition of the cereal base.
h) Pasteurisation with plate-heat-exchangers/tubular-heat-exchangers 98°C/12s.
i) Cooling to 10°C.
j) Whipping and filling into cups.

### Example 3

### Peach/Passionfruit pap with cereal base

### Recipe:

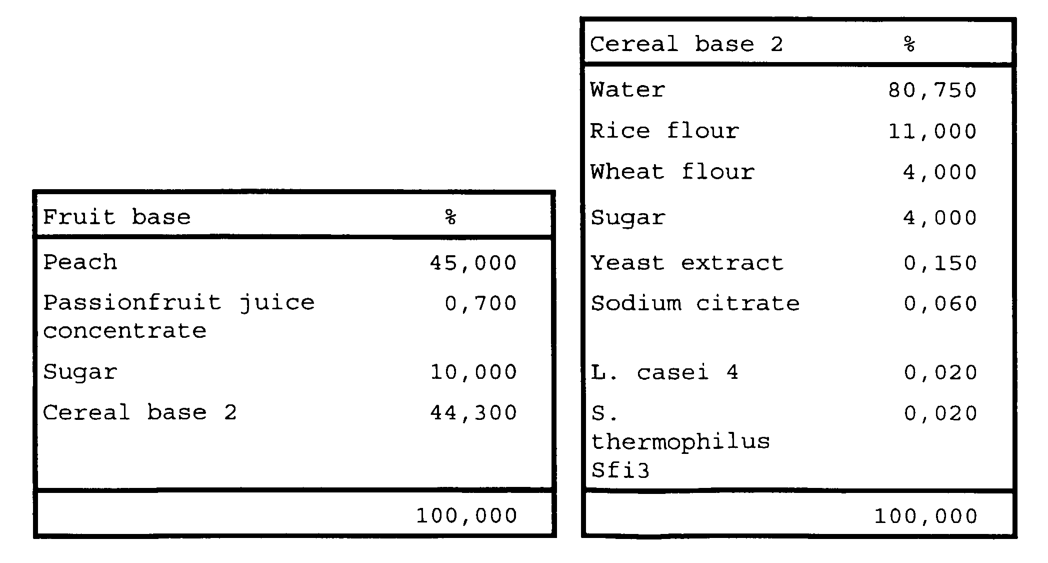

### Preparation:

a) Mixing of all dry ingredients of the cereal base, that is rice flour, wheat flour, sugar, yeast extract and sodium citrate .
b) Dissolving these ingredients in hot water and soaking.
c) UHT-treatment of this cereal base with tubular-heat-exchangers or scraped-surface-heat-exchangers 130°C/60s.
d) Cooling the cereal base with tubular-heat-exchangers or scraped-surface-heat-exchangers to 40°C.
e) Inoculation of the cereal base with the two strains and fermentation to pH 4,0.
f) Dissolving sugar in water and mixing with the passionfruit juice concentrate and the peach, addition of the cereal base.
g) Pasteurisation with tubular-heat-exchangers 98°C/120s.
h) Filling in cups at 75°C.

### Example 4

### Pineapple/Lemon drink with cereal base

### Recipe:

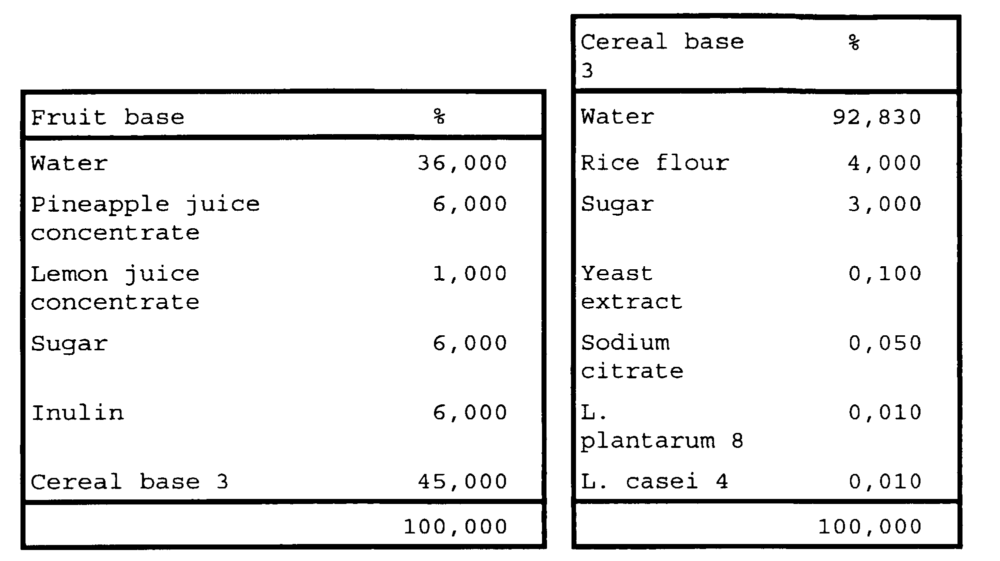

### Preparation:

a) Mixing of all dry ingredients of the cereal base, that is rice flour, sugar, yeast extract and sodium citrate.
b) Dissolving these ingredients in hot water.
c) UHT-treatment of this cereal base with plate-heat-exchangers/tubular-heat-exchangers or steam injection 130°C/60s.
d) Cooling the cereal base with plate-heat-exchangers/tubular-heat-exchangers 38°C.
e) Inoculation of the cereal base with the two strains and fermentation to pH 3,5
f) Mixing of the dry ingredients of the fruit base, that is sugar and inulin.
g) Dissolving in these ingredients in water, pineapple juice concentrate, lemon juice concentrate, addition of the cereal base.
h) Pasteurisation with plate-heat-exchangers/tubular-heat-exchangers 95°C/60s.
i) Filling in bottles at 10°C.

### Information relating to microorganisms

### 1. Lactobacillus Plantarum

### Florapan L-73 of C. Hansen's Laboratories

### 2. Lactobacillus casei

Disclosed as registration No. 393 on page 115 of the 1989 Catalog of the American Type Culture Collection 12301 Parklawn Drive- Rockville, Maryland 20852 USA.

### 3. Streptococcus Thermophilus

Isolated from a fermented dairy product.
Registered on December 8, 1993 in accordance with the rules of the Budapest Convention under No. I-1383 at the Collection Nationale de Cultures de Microorganismes-Institut Pasteur- 28, rue du Docteur Roux F-75724 Paris.

## Claims

1. Process for increasing the fruity taste of foodstuffs with reduced content of fruit material, which comprises adding thereto an amylaceous composition resulting from a process wherein a slurry of cereal flour is first subjected to soaking and further sterilised and acidified and/or fermented.

2. Process according to claim 1, wherein the cereal flour is selected from the group consisting of rice flour, wheat flour, oat flour, barley flour and any mixture thereof.

3. Process according to claims 1 and 2, wherein the acidification is reached by adding lactic acid and/or citric acid.

4. Process according to claims 1 and 2, wherein the fermentation is reached by an inoculation with an acidifying strain or a mixture of acidifying strains selected from Lactobacillus species, Streptococcus thermophilus and Bifidobacterium species and by a fermentation over a period and a temperature such as to afford a pH of 3,0 to 5,0 of the fermented material.

5. Process according to claim 4, wherein the Lactobacillus species are selected from the group consisting of L. acidophilus, L. casei, L. plantarum, L. delbrueckii, L. brevis, L. pentosus, L. mesenteroides and L. bulgaricus and a mixture thereof.

6. Composition useful for reducing the fruit content in foodstuffs, which consists in an amylaceous composition resulting from a process wherein a slurry of cereal flour is first subjected to soaking and further sterilised and acidified and/or fermented according to the claims 1 to 5.

7. Composition according to claim 6, comprising 4 to 10% of cereals, between 0 and 8% sugar, between 0 and 0,3% yeast extract and between 0.01 and 0.05 % of a strain.

8. Composition according to claim 6, comprising 8 to 16% of cereals, between 0 and 10% sugar and between 0 and 0,3% monoglyceride and between 0.01 and 0.05 % of a strain.

9. Composition according to claim 6 to 8, having a pH of about 3,0 to 5,0 and further characterised by a dry matter content of about 4 to 20 weight %.

10. Foodstuff comprising fruit material and a composition according to any of claims 6 to 9.

11. Foodstuff according to claim 10, wherein said foodstuff is in the form solid, semi-solid or liquid.

12. Foodstuff according to any of claims 10 or 11, wherein said foodstuff contains between 5 to 75% of the fruit material and between 25 to 95 % of the composition according to claims 7 to 9.
